# EUROPEAN PATENT APPLICATION

(11) **EP 4 344 931 A2**
(43) Date of publication of application: **03.04.2024**
(21) Application number: 23199872.5
(22) Date of filing: 26.09.2023
(51) Int. Cl.: B60L 13/03

(54) **LINEAR INDUCTION MOTOR DRIVE FOR A HIGH-SPEED TRANSPORTATION SYSTEM**

(30) Priority: 26.09.2022 US 202263409953 P; 21.07.2023 US 202318356336
(71) Applicant: Hamilton Sundstrand Corporation, Charlotte, NC 28217-4578 (US)
(72) Inventor: KRENZ, Michael, Roscoe, 61073 (US)
(74) Representative: Dehns

(57) **Abstract**

A transportation system includes a first passageway (22a) and a second passageway (22b) arranged in a side-by-side configuration. A first propulsion system (30) is operable to move a first capsule (24) within the first passageway and a second propulsion system (30) is operable to move a second capsule (24) within the second passageway. The second propulsion system is integrally formed with the first propulsion system.

## Description

### CROSS-REFERENCE TO RELATED APPLICATIONS

This application claims the benefit of U.S. Application No. 63/409,953 filed September 26, 2022.

### BACKGROUND

Exemplary embodiments pertain to the art of drives and, in particular, a drive for a high-speed transportation system such as a hyperloop.

A hyperloop is a proposed high-speed transportation system for both public and goods transport. In an example system, capsules would accelerate to cruising speeds using linear electric motors and glide above their track on air bearings through tubes. The Linear Induction Motor (LIM) drive for a hyperloop type capsule/train transportation system represents a very large portion of the infrastructure cost for such a transportation system. As currently proposed, there are separate LIM drive windings for each "track."

### BRIEF DESCRIPTION

According to an embodiment, a transportation system includes a first passageway and a second passageway arranged in a side-by-side configuration. A first propulsion system is operable to move a first capsule within the first passageway and a second propulsion system is operable to move a second capsule within the second passageway. The second propulsion system is integral with the first propulsion system.

In addition to one or more of the features described above, or as an alternative, in further embodiments at least one of the first propulsion system and the second propulsion system includes a linear induction motor.

In addition to one or more of the features described above, or as an alternative, in further embodiments the first propulsion system includes a first stationary portion and the second propulsion system includes a second stationary portion and a stationary propulsion element is shared between the first stationary portion and the second stationary portion.

In addition to one or more of the features described above, or as an alternative, in further embodiments the stationary propulsion element includes a core having at least one set of windings mounted about the core. The at least one array of windings is operable as part of both the first stationary portion and the second stationary portion.

In addition to one or more of the features described above, or as an alternative, in further embodiments the at least one array of windings includes a first array of winding operable as part of the first stationary portion and a second array of windings operable as part of the second stationary portion. The second set of windings is separate from the first set of windings.

In addition to one or more of the features described above, or as an alternative, in further embodiments each winding of the at least one array of windings is individually energizable.

In addition to one or more of the features described above, or as an alternative, in further embodiments the first propulsion system includes a first stationary propulsion element and a common stationary propulsion element separated from one another by a first clearance. The second propulsion system includes a second stationary propulsion element and the common stationary propulsion element separated from one another by a second clearance.

In addition to one or more of the features described above, or as an alternative, in further embodiments the first stationary propulsion element, the common stationary propulsion element, and the second stationary propulsion element are stacked along an axis.

In addition to one or more of the features described above, or as an alternative, in further embodiments the first stationary propulsion element, the second stationary propulsion element, and the common stationary propulsion element are arranged in vertical alignment.

In addition to one or more of the features described above, or as an alternative, in further embodiments the first stationary propulsion element, the second stationary propulsion element, and the common stationary propulsion element are arranged between the first passageway and the second passageway.

In addition to one or more of the features described above, or as an alternative, in further embodiments at least one of the first stationary propulsion element and the second stationary propulsion element includes an array of windings.

In addition to one or more of the features described above, or as an alternative, in further embodiments a movable portion of the first propulsion system is mounted to the first capsule and is receivable within the first clearance between the first stationary propulsion element and the common stationary propulsion element and a movable portion of the second propulsion system is mounted to the second capsule and is receivable within the second clearance between the common stationary propulsion element and the second stationary propulsion element.

In addition to one or more of the features described above, or as an alternative, in further embodiments the common stationary propulsion element is operable to drive the first capsule and the second capsule simultaneously.

According to an embodiment, a method of driving a first capsule within a first passageway and a second capsule within a second passageway is provided. The first passageway and the second passageway have a side-by-side configuration. The method includes selectively energizing at least a first stationary propulsion element of a first propulsion system for driving the first capsule and selectively energizing at least a second stationary propulsion element for driving the second capsule, wherein at least a portion of the first propulsion system is integral with the second propulsion system.

In addition to one or more of the features described above, or as an alternative, in further embodiments selectively energizing at least one stationary propulsion element of the first propulsion system for driving the first capsule includes selectively energizing at least one of a first stationary propulsion element and a common stationary propulsion element.

In addition to one or more of the features described above, or as an alternative, in further embodiments selectively energizing at least one stationary propulsion element of the second propulsion system for driving the second capsule includes selectively energizing at least the second stationary propulsion element for driving the second capsule and the common stationary propulsion element.

In addition to one or more of the features described above, or as an alternative, in further embodiments the common stationary propulsion element includes an array of windings and at least one winding of the array of windings is selectively energized to drive the first capsule and at least one other winding of the array of windings is selectively energized to drive the second capsule, the first capsule and the second capsule being driven simultaneously.

In addition to one or more of the features described above, or as an alternative, in further embodiments identifying a passing location at both the first passageway and the second passageway where the first capsule and the second capsule will pass one another.

In addition to one or more of the features described above, or as an alternative, in further embodiments selectively deenergizing a portion of the common stationary propulsion element at the passing location.

### BRIEF DESCRIPTION OF THE DRAWINGS

The following descriptions should not be considered limiting in any way. With reference to the accompanying drawings, like elements are numbered alike:
FIG. 1 is a schematic diagram of a transportation system according to an embodiment;
FIG. 2 is a cross-sectional view of a portion of the transportation system of FIG. 1 according to an embodiment;
FIG. 3 is a schematic diagram of a side view of a propulsion system according to an embodiment;
FIG. 4 is a cross-sectional view of a portion of the transportation system according to an embodiment;
FIG. 5 is a schematic diagram of a side view of a portion of a first and second propulsion system according to an embodiment; and
FIG. 6 is a schematic diagram of a side view of a portion of a first and second propulsion system according to another embodiment.

### DETAILED DESCRIPTION

A detailed description of one or more embodiments of the disclosed apparatus and method are presented herein by way of exemplification and not limitation with reference to the Figures.

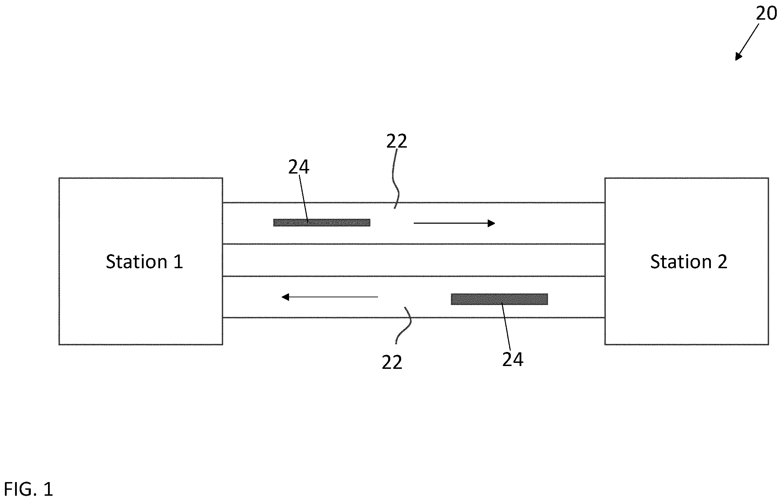

With reference to FIG. 1, an example of a transportation system 20 according to an embodiment is illustrated. As shown, the transportation system 20, such as a hyperloop for example, includes one or more passageways 22 connected to and extending between two or more stations, such as station 1 and station 2 for example. One or more capsules or transport pods 24 are capable of travelling through the passageways 22. In an embodiment, the passageways 22 are tubes having a low-pressure environment, such as having a pressure equal to or less than 1 atm at sea level for example. As shown, each passageway 22 may provide a one-way connection between stations. For example, a first passageway 22a is configured to receive a capsule 24 moving in a first direction and a second passageway 22b is configured to receive another capsule 24 moving in a second, opposite direction. However, embodiments where multiple capsules 24 travelling in different directions are arranged within a single passageway 22 are also contemplated herein.

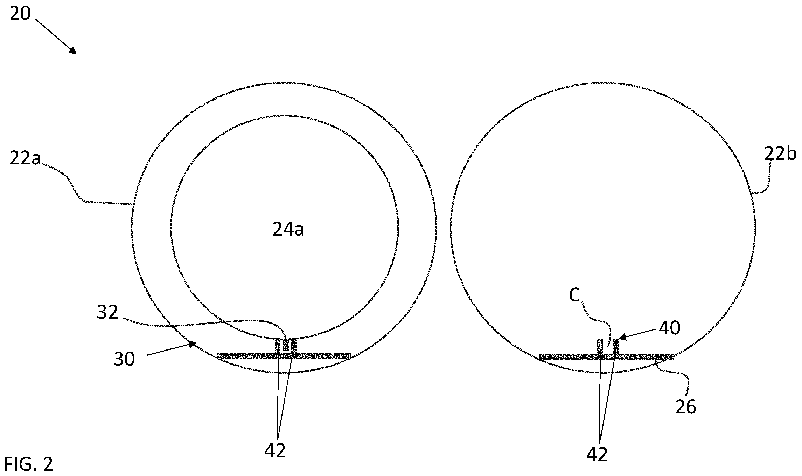

The passageways 22 and the capsules 24 may be sized for optimal air flow around the capsule 24 to improve performance and energy consumption efficiency at a desired travel speed. The low-pressure environment within a passageway 22 minimizes the drag acting on the capsule 24 as it moves. Further, the capsule 24 may be levitated over a track 26 (FIG. 2) during at least a portion of the movement of the capsule 24 within the passageway 22 between stations. In an embodiment, the capsule 24 is levitated using a pressurized fluid flow, such as air or another liquid for example, exiting out a bottom side of the capsule 24. In other embodiments, the capsule 24 may be levitated using passive magnetic levitation (mag-lev).

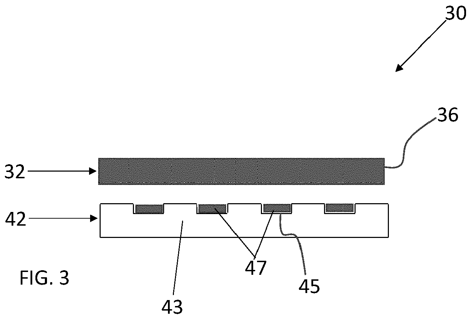

A propulsion system 30 is operable to move each capsule 24 through the passageway 22. In the illustrated, non-limiting embodiment, the propulsion system 30 is a linear induction motor. Accordingly, the propulsion system 30 may include a first or primary portion 32 fixedly mounted to the capsule 24 and movable through the passageway 22 with the capsule 24 and a second stationary portion 40 associated with the passageway 22. The first portion 32 of the propulsion system 30 includes at least one propulsion element 36 (see FIG. 3). Examples of suitable propulsion elements include windings, permanent magnets, an iron sheet, or another suitable element such as formed from a ferromagnetic material and configured to have eddy currents induced therein when arranged within a magnetic field.

A second portion 40 of the propulsion system 30 may be mounted at a periphery of the passageway 22. The second portion 40 of the propulsion system 30 may include at least one stationary propulsion element 42, and in some embodiments, includes a plurality of stationary propulsion elements 42 extending over the length of the passageway 22 between adjacent stations. In an embodiment, the at least one stationary propulsion element 40 includes an array of windings. For example, as shown in FIG. 3, a stationary propulsion element 42 may include a core 43 having a plurality of grooves 45 formed therein and a plurality of windings 47 disposed within the grooves 45.

In the illustrated, non-limiting embodiment, the propulsion system is a two-sided system such that the stationary propulsion elements 42 are arranged as two substantially parallel arrays separated from one another by a clearance C. The first portion 32 of the propulsion system 30 may be receivable within the clearance C such that each stationary propulsion element 42 is positioned adjacent to a respective surface of the one or more propulsion element 36 mounted to the capsule 24. However, embodiments where the at least one stationary propulsion element 42 is receivable within a clearance formed between adjacent movable propulsion elements 36 is also contemplated herein.

In operation, the stationary propulsion elements 42 are energized by a drive unit to propel a corresponding capsule 24 within a passageway 22 in a desired direction. As known in the art, when a voltage is applied to the windings 47 of the second portion 40, the interaction between the windings 47 and the propulsion elements 36 imparts motion to the capsule 24. Although the first portion 32 of the propulsion system 30 is illustrated and described herein as being mounted to the movable capsules 24 and the second portion 40 is illustrated as being stationary and mounted within the passageway 22, embodiments where the first portion 32 is stationary and mounted within the passageway 22 and the second portion 40 is mounted to the movable capsule 24 are also within the scope of the disclosure.

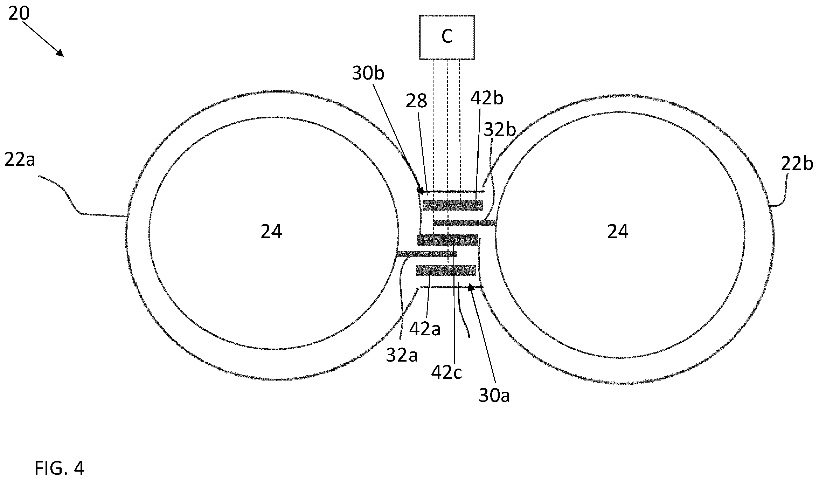

With reference now to FIG. 4, in embodiments where at least a portion of two passageways 22 are located side-by-side (tandem), the stationary second portion 40 of each propulsion system 30 may be disposed at a location generally between the two passageways 22. For example, a lateral gap or cavity 28 may be arranged between the first and second passageways 22a, 22b, and the stationary portion 40 of at least one, and in some embodiments, of both propulsion systems is disposed within this cavity 28. In the illustrated, non-limiting embodiment, the stationary portion of the first propulsion system 30a is vertically offset from the stationary portion of the second propulsion system 60b, within the cavity 28. Such an offset may enable using the same blade 32 and capsule 24 for either direction of travel. It should be appreciated that although the two passageways 22 are illustrated at generally the same elevation, in some embodiment, the elevation of the passageways 22 may differ slightly, such as by an amount equal to the spacing of the blade 32 and a stationary propulsion element 42 for example. With such offset elevations, a position of the blade 32 relative to the capsule 24 need not be adjusted between travel in the first passageway 22a and the second passageway 22b.

In an embodiment, at least part of the second portion 40 of the propulsion system 30 is shared between two adjacent passageways 22. For example, a stationary propulsion element 42 may be shared between the propulsion system 30a of the first passageway 22a and the propulsion system 30b of the second passageway 22b. In the illustrated, non-limiting embodiment, the second portion 40 of the propulsion system 30a of the first passageway 22a includes a first stationary propulsion element 42a including a first array of windings and a common stationary propulsion element 42c including a third array of windings. The common stationary propulsion element 42c is spaced from the first stationary propulsion element 42a by a first clearance such that a first portion 32 of the propulsion system 30a of the first passageway 22 is receivable between the first stationary propulsion element 42a and the common stationary propulsion element 42c. Similarly, the stationary second portion 40 of a propulsion system 30b of the second passageway 22b includes a second stationary propulsion element 42b including a second array of windings and the common stationary propulsion element 42c including a third array of windings. The common stationary propulsion element 42c is separated from the second stationary propulsion element 42b by a second clearance such that a first portion 32b of a propulsion system 30b of the second passageway 22b is receivable between the common stationary propulsion element 42c and the second stationary propulsion element 42b.

In such a configuration, the common stationary propulsion element 42c is integral with both the first propulsion system 30a and the second propulsion system 30b. As used herein the term integral is intended to suggest that the same common stationary propulsion element 42c is operable as part of both the first propulsion system and the second propulsion system 30b. Accordingly, the common stationary propulsion element 42c can be used to provide power to a capsules 24 within both passageways 22a, 22b, such as via the first portions 32a, 32b, respectively. Further, because one or more of the plurality of windings within the common stationary propulsion element 42c can be energized individually, in some embodiments the common stationary propulsion element 42c may be used to drive both a first capsule in a first direction and a second capsule in a second direction simultaneously.

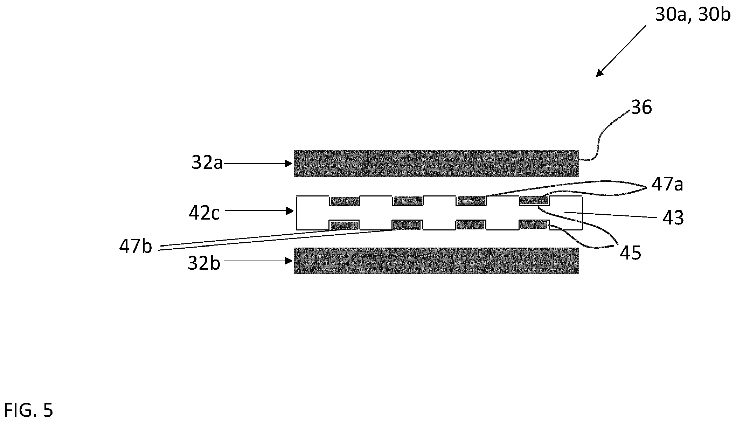

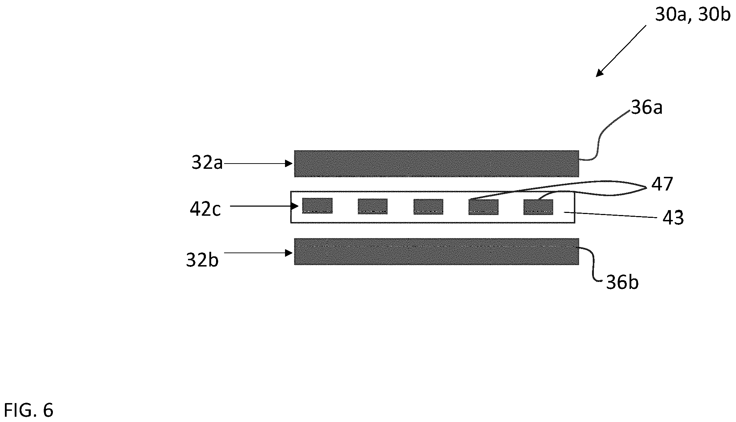

In the non-limiting embodiment of FIG. 5, the common stationary propulsion element 42c is a singular body positioned centrally between the first stationary propulsion element 42a and the second stationary propulsion element 42b. The common stationary propulsion element 42c may include a core 43 having two sets of windings 47a, 47b disposed in grooves 45 formed at opposite sides of the core 43. In such embodiments, the windings 47a located adjacent to a first surface of the core 43 may be operable as part of the first propulsion system 30a and the windings 47b located adjacent to a second opposite surface of the core 43 may be operable as part of the second propulsion system 30b. However, embodiments where the common stationary propulsion element 42c includes a core 43 having one or more windings 47 associated with both the first and second propulsion systems 30a, 30b, as shown in FIG. 6, are also contemplated herein. As shown, one or more windings 47 of the common stationary propulsion element 42c may be positioned to cooperate with the at least one propulsion element 36 associated with the capsule 24a and the at least one propulsion element 36 associated with the capsule 24b to drive the respective capsules 24a, 24b.

In an embodiment, a controller C associated with at least one of the first propulsion system 30a and the second propulsion system 30b is capable of identifying a condition where a capsule 24 within the first passageway 22a and a capsule 24 within the second passageway 22b will pass one another. In response to a determination that such a passing will occur, one or more of the plurality of windings of the stationary propulsion element 42c at or adjacent to the passing location are not energized (skipped). By not energizing these windings, the capsules 24 are able to move past one another, such as driven by the propulsion acting on the capsules 24 upstream from the passing location. This movement of a capsule 24 without energizing one or more windings of the stationary propulsion element 42c to induce a force on the one or more first propulsion elements 36 coupled to the capsule 24 may be considered coasting.

By integrating the propulsion system between two adjacent passageways 22a, 22b, an overall reduction in weight and cost of materials to construct the infrastructure (tube/track) for a hyperloop style transportation system is achieved. A savings of between 25% and 33% of the needed winding materials to construct the propulsion system can be obtained using a shared array of windings as disclosed herein. Although the propulsion system is illustrated and described herein with respect to a hyperloop, it should be appreciated that the propulsion system may be used in any application having two parallel passages through which one or more bodies is movable, such as an elevator system or people mover for example.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A transportation system comprising:
a first passageway (22a) and a second passageway (22b) arranged in a side-by-side configuration;
a first propulsion system (30) for moving a first capsule (24) within the first passageway; and
a second propulsion system (30) for moving a second capsule (24) within the second passageway, the second propulsion system being integral with the first propulsion system.

2. The transportation system of claim 1, wherein at least one of the first propulsion system and the second propulsion system includes a linear induction motor.

3. The transportation system of claim 1 or 2, wherein the first propulsion system (30) includes a first stationary portion (32) and the second propulsion system (30) includes a second stationary portion (40), and a stationary propulsion element (42) is shared between the first stationary portion and the second stationary portion.

4. The transportation system of a claim 3, wherein the stationary propulsion element (42) includes a core (43) having at least one set of windings (47) mounted about the core, the at least one array of windings being operable as part of both the first stationary portion (32) and the second stationary portion (40).

5. The transportation system of a claim 4, wherein the at least one array of windings (47) including a first array of winding operable as part of the first stationary portion (32) and a second array of windings operable as part of the second stationary portion (40), the second set of windings being separate from the first set of windings; and optionally wherein each winding of the at least one array of windings (47) is individually energizable.

6. The transportation system of any preceding claim, wherein the first propulsion system (30) includes a first stationary propulsion element (42a) and a common stationary propulsion element (42c) separated from one another by a first clearance, and the second propulsion system (30) includes a second stationary propulsion element (42b) and the common stationary propulsion element separated from one another by a second clearance.

7. The transportation system of claim 6, wherein the first stationary propulsion element (42a), the common stationary propulsion element (42c), and the second stationary propulsion (42b) element are stacked along an axis; and optionally wherein the first stationary propulsion element, the second stationary propulsion element, and the common stationary propulsion element are arranged in vertical alignment.

8. The transportation system of claim 6 or 7, wherein the first stationary propulsion element (42a), the second stationary propulsion element (42b), and the common stationary propulsion element (42c) are arranged between the first passageway (22a) and the second passageway (22b).

9. The transportation system of claim 6, 7 or 8, wherein at least one of the first stationary propulsion element (42a) and the second stationary propulsion element (42) includes an array of windings (47).

10. The transportation system of any of claims 6 to 9, wherein a movable portion of the first propulsion system (30) is mounted to the first capsule (24) and is receivable within the first clearance between the first stationary propulsion element (42a) and the common stationary propulsion element (42c) and a movable portion of the second propulsion system (30) is mounted to the second capsule (24) and is receivable within the second clearance between the common stationary propulsion element and the second stationary propulsion element (42b); and/or wherein the common stationary propulsion element (42c) is operable to drive the first capsule and the second capsule simultaneously.

11. A method of driving a first capsule within a first passageway and a second capsule within a second passageway, the first passageway and the second passageway having a side-by-side configuration, the method comprising:
selectively energizing at least one stationary propulsion element of a first propulsion system for driving the first capsule; and
selectively energizing at least one stationary propulsion element for driving the second capsule, wherein at least a portion of the first propulsion system is integral with the second propulsion system.

12. The method of claim 11, wherein selectively energizing at least one stationary propulsion element of the first propulsion system for driving the first capsule further comprises selectively energizing at least one of a first stationary propulsion element and a common stationary propulsion element.

13. The method of claim 12, wherein selectively energizing at least one stationary propulsion element of the second propulsion system for driving the second capsule further comprises selectively energizing at least the second stationary propulsion element for driving the second capsule and the common stationary propulsion element.

14. The method of claim 13, wherein the common stationary propulsion element includes an array of windings and at least one winding of the array of windings is selectively energized to drive the first capsule and at least one other winding of the array of windings is selectively energized to drive the second capsule, the first capsule and the second capsule being driven simultaneously.

15. The method of claim 13 or 14, further comprising identifying a passing location at both the first passageway and the second passageway where the first capsule and the second capsule will pass one another; and optionally further comprising selectively deenergizing a portion of the common stationary propulsion element at the passing location.
